# EUROPEAN PATENT SPECIFICATION

(11) **EP 3 913 333 B1**
(45) Date of publication and mention of the grant of the patent: **19.04.2023**
(21) Application number: 20749152.3
(22) Date of filing: 27.01.2020
(51) Int. Cl.: G01D 5/34, G01D 5/14

(54) **POSITION DETECTION DEVICE**
POSITIONSDETEKTIONSVORRICHTUNG
DISPOSITIF DE DÉTECTION DE POSITION

(30) Priority: 31.01.2019 JP 2019015921
(43) Date of publication of application: 24.11.2021
(73) Proprietor: METROL CO., LTD., Tachikawa-shi Tokyo 190-0011 (JP)
(72) Inventor: YOSHIOKA Takamoto, Tachikawa-shi, Tokyo 190-0011 (JP); KANNO Takayuki, Tachikawa-shi, Tokyo 190-0011 (JP)
(74) Representative: Ström & Gulliksson AB
(86) International application number: PCT/JP2020/002811
(87) International publication number: WO 2020/158677

(56) References cited:
- JP-A- S6 252 402
- JP-A- S6 488 302
- JP-A- S6 488 302
- JP-A- 2001 221 608
- JP-A- 2001 221 608
- JP-A- 2009 222 594
- JP-A- 2011 038 919
- JP-A- 2011 169 696
- JP-A- 2011 169 696
- JP-A- 2013 002 874
- JP-U- 3 189 365
- US-A1- 2012 112 769

## Description

### TECHNICAL FIELD

The present invention relates to a position detection device, in particular to a position detection device that detects the position of a movable body.

### BACKGROUND ART

For example, in a machine tool such as a machining center, it is necessary to detect the initial position of a tool in order to realize accurate machining. As a position detection device that detects the position of a movable body moved by a detection target such as a tool, there is known a device in which the electrical contact is mechanically turned on/off in accordance with the movement of the movable body (for example, see Patent Document 1).

However, such a conventional position detection device has a short life span since the contacts deteriorate due to repeated mechanical turning on/off. In addition, poor continuity between contacts occurs due to inclusion of foreign matter or formation of oxide film, and the detection accuracy is lowered due to wear or denting of the contact caused by repeated contact.

Patent Document 1: Japanese Unexamined Patent Application, Publication No. 2008-183699

JP2011169696 discloses a magnetic position sensor.

### DISCLOSURE OF THE INVENTION

### Problems to be Solved by the Invention

In response to the above issues of the conventional art, the present invention has been made, and an object of the present invention is to provide a position detection device capable of performing position detection stably with a long life span and high detection accuracy.

### Means for Solving the Problems

According to one aspect of the present invention, as defined in claim 1, there is provided a position detection device capable of performing position detection stably with a long life span and high detection accuracy. The position detection device includes a magnet configured to move with a movable body on a movement path extending along a first direction. The magnet includes different magnetic poles in a second direction perpendicular to the first direction. The position detection device further includes a pair of magnetic sensors that are spaced apart from the movement path by an equal distance in the second direction and disposed at an equal distance from a reference line extending in the second direction. The pair of magnetic sensors have identical sensor characteristics. The position detection device includes a detecting portion configured to detect that the magnet is positioned on the reference line when outputs of the pair of magnetic sensors coincide.

According to another aspect of the present invention, as defined in claim 3, there is provided a position detection device capable of performing position detection stably with a long life span and high detection accuracy. The position detection device includes a light source configured to move with a movable body on a movement path extending along a first direction. The position detection device further includes a pair of light sensors that are spaced apart from the movement path by an equal distance in a second direction perpendicular to the first direction and disposed at an equal distance from a reference line extending in the second direction. The pair of light sensors have identical sensor characteristics. The position detection device includes a detecting portion configured to detect that the light source is positioned on the reference line when outputs of the pair of light sensors coincide.

### BRIEF DESCRIPTION OF THE DRAWINGS

FIG. 1 is a schematic diagram showing the configuration of a position detection device according to a first embodiment of the present invention;
FIG. 2 is a graph showing the relationships between the position of a magnet and the outputs of magnetic sensors in FIG. 1;
FIG. 3 is a graph showing changes in the outputs of the magnetic sensors in FIG. 1 with temperature; and
FIG. 4 is a schematic diagram showing the configuration of a position detection device according to a second embodiment of the present invention.

### PREFERRED MODE FOR CARRYING OUT THE INVENTION

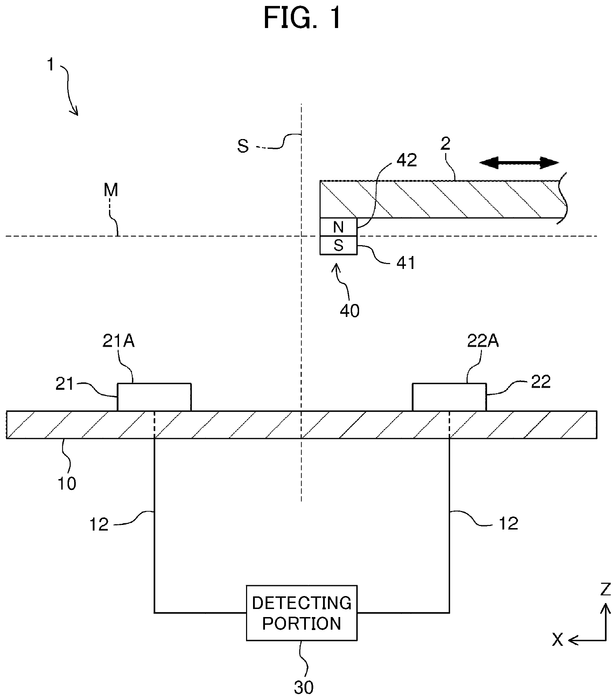

Hereinafter, embodiments of the position detection device according to the present invention will be described in detail with reference to FIGS. 1 to 4. In FIGS. 1 to 4, identical or equivalent components are denoted by identical reference numerals, and a repetitive description thereof is omitted. In FIGS. 1 to 4, the scale and dimensions of each component may be exaggerated, and some components may be omitted.

FIG. 1 is a schematic diagram showing the configuration of a position detection device 1 according to a first embodiment of the present invention. As shown in FIG. 1, the position detection device 1 of the present embodiment includes a fixing portion 10, a pair of magnetic sensors 21 and 22 fixed on the fixing portion 10, a detecting portion 30 connected to the magnetic sensors 21 and 22 via signal lines 12, and a magnet 40 attached to a movable body 2 that is moved by a detection target such as a tool of a machining center. The movable body 2 is movable along an X direction (first direction) as indicated by an arrow, and the magnet 40 attached to the movable body 2 is configured to move on a movement path M extending along the X direction. The position detection device 1 detects whether the movable body 2 movable in the X direction (thus a detection target such as a tool of a machining center) is in a predetermined position.

The magnet 40 includes different magnetic poles in a Z direction (second direction). For example, as shown in FIG. 1, a magnetic pole 42 on the +Z direction side of the magnet 40 may be N pole, and a magnetic pole 41 on the -Z direction side of the magnet 40 may be S pole, or vice versa. The shape of the magnet 40 may be a rectangular parallelepiped shape, a cubic shape, a cylindrical shape, or the like.

The magnetic sensors 21 and 22 detect a surrounding magnetic field, and have identical sensor characteristics (electrical characteristic, magnetic characteristic, and temperature characteristic). The magnetic sensors 21 and 22 are disposed on the fixing portion 10 extending in the X direction, and are spaced apart from the movement path M, on which the magnet 40 moves, by an equal distance in the Z direction. The magnetic sensors 21 and 22 respectively include sensor sensing surfaces 21A and 22A perpendicular to the Z direction. Further, the magnetic sensors 21 and 22 are disposed at an equal distance from a reference line S extending in the Z direction. In other words, the reference line S is positioned on the midpoint of the line segment connecting the two magnetic sensors 21 and 22. Examples of the magnetic sensor 21 and 22 include a Hall element, a magnetic modulation type sensor, a magnetoresistive element, and a SQUID magnetic sensor.

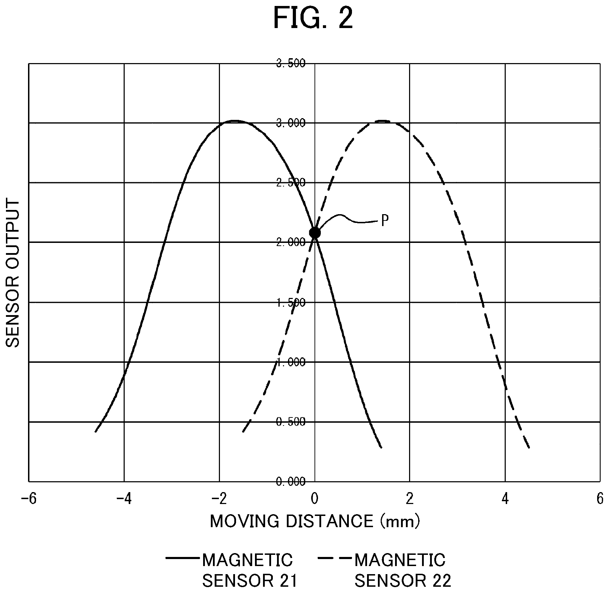

The outputs from the magnetic sensors 21 and 22 are input to the detecting portion 30. The detecting portion 30 includes a comparison circuit that compares the outputs from these magnetic sensors 21 and 22. FIG. 2 is a graph showing the relationships between the position of the magnet 40 and the outputs of the magnetic sensors 21 and 22. In FIG. 2, the output of the magnetic sensor 21 is indicated by a solid line, the output of the magnetic sensor 22 is indicated by a dotted line. The horizontal axis of FIG. 2 represents the distance from the reference line S to the center of the magnet 40, and the vertical axis represents the outputs of the magnetic sensors 21 and 22. In this example, the distance between the center of the magnetic sensor 21 in the X direction and the center of the magnetic sensor 22 in the X direction is about 3 mm, and the width of the magnet 40 in the X direction is about 4 mm.

As shown in FIG. 2, a plot of sensor output of each of the magnetic sensors 21 and 22 versus the position of the magnet 40 in the X direction takes a covex shape. Here, since the magnetic sensors 21 and 22 have identical sensor characteristics, when the magnet 40 is positioned on the midpoint of the line segment connecting the magnetic sensor 21 and the magnetic sensor 22, i.e., when the moving distance is 0 mm (when the magnet 40 is positioned on the reference line S), the sensor outputs of the magnetic sensors 21 and 22 coincide. In other words, as shown in FIG. 2, the point P where the output characteristic of the magnetic sensor 21 and the output characteristic of the magnetic sensor 22 intersect with each other is positioned on the reference line S. Therefore, when the output of the magnetic sensor 21 and the output of the magnetic sensor 22 coincide, it can be determined that the magnet 40 is positioned on the reference line S. The detecting portion 30 uses this principle, compares the output of the magnetic sensor 21 to the output of the magnetic sensor 22, and determines that the magnet 40 is positioned on the reference line S when the outputs of the magnetic sensors 21 and 22 coincide.

With this structure, it is possible to detect that the magnet 40 is positioned on the reference line S without using a mechanical contact. That is, according to the position detection device 1 of the present embodiment, it is possible to detect the position of the movable body 2 without using a mechanical contact. Since no mechanical contact is used, shortening of the life span due to deterioration of the contact, poor continuity between contacts, and reduced detection accuracy due to wear or denting of the contact do not occur.

Here, the magnetic sensors 21 and 22 are disposed sc that the rates of change of the outputs of the magnetic sensors 21 and 22 are maximized when the magnet 40 is positioned on the reference line S. Consequently, the outputs of the magnetic sensors 21 and 22 are more likely to change when the magnet 40 is in the vicinity of the reference line S, and thus the point where the outputs of the magnetic sensors 21 and 22 coincide is more accurately identified. Therefore, the detection accuracy of the position of the magnet 40 is increased.

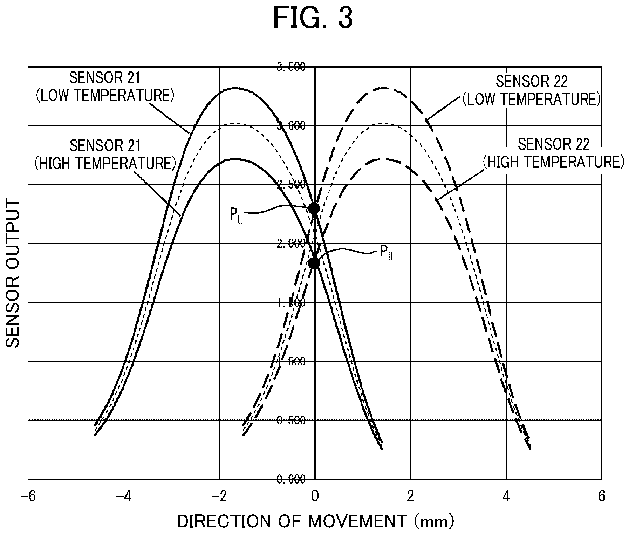

Further, although the output characteristics of the magnetic sensors 21 and 22 change with temperature, since the sensor characteristics of the magnetic sensors 21 and 22 are identical, even if the output characteristics of the magnetic sensors 21 and 22 change with temperature, the change in the output characteristic of the magnetic sensor 21 and the change in the output characteristic of the magnetic sensor 22 cancel each other out. Therefore, as shown in FIG. 3, the point PL where the output characteristic of the magnetic sensor 21 when the temperature decreases and the output characteristic of the magnetic sensor 22 when the temperature decreases intersect is positioned on the reference line S, and the point PH where the output characteristic of the magnetic sensor 21 when the temperature increases and the output characteristic of the magnetic sensor 22 when the temperature increases intersect is also positioned on the reference line S. Therefore, as described above, by determining whether the output of the magnetic sensor 21 and that of the magnetic sensor 22 coincide, even when the temperature changes, it is possible to stably detect that the magnet 40 is positioned on the reference line S. Note that, in FIG. 3, the output characteristics of the magnetic sensors 21 and 22 shown in FIG. 2 are indicated by thin dotted lines.

Similarly, even when the electrical or magnetic characteristics of the magnetic sensors 21 and 22 change, since the change in the output characteristic of the magnetic sensor 21 and the change in the output characteristic of the magnetic sensor 22 cancel each other out, it is possible to stably detect the position of the magnet 40. Further, since the external magnetic fields in the Z direction and a Y direction vertcial to the X-Z plane act similarly to both the magnetic sensors 21 and 22, and the change in the output characteristic of the magnetic sensor 21 and the change in the output characteristic of the magnetic sensor 22 cancel each other out, it is possible to detect the position of the magnet 40, suppressing the influence of these external magnetic fields. Further, since the changes in the output characteristics of the magnetic sensors 21 and 22 with respect to the displacement of the magnet 40 in the Z direction or Y direction cancel each other out, it is possible to detect the position of the magnet 40, suppressing the influence of the displacement of the magnet 40 in the Z direction or Y direction.

Note that the outputs of the magnetic sensors 21 and 22 may be converted from analog to digital, and noise may be reduced by a digital filter. Alternatively, the analog outputs of the magnetic sensors 21 and 22 may be applied to a low-pass filter to eliminate noise.

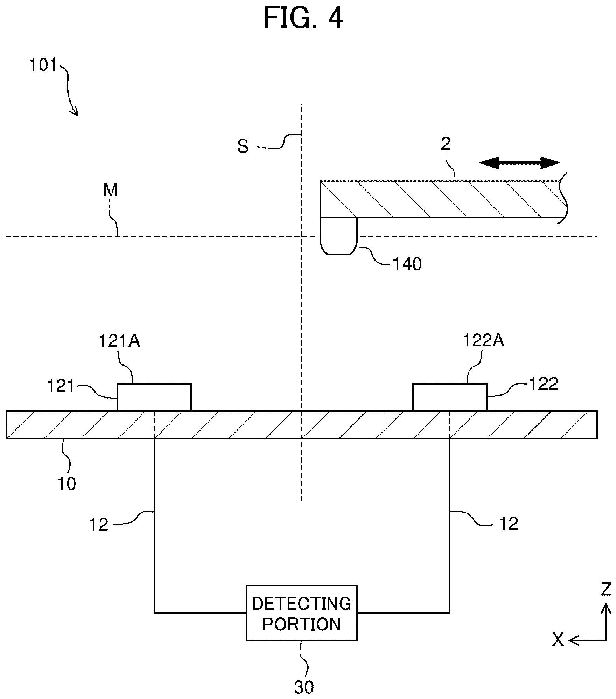

FIG. 4 is a schematic diagram showing the configuration of a position detection device 101 according to a second embodiment of the present invention. As shown in FIG. 4, the position detection device 101 of the present embodiment includes light sensors 121 and 122 and a light source 140 in place of the magnetic sensors 21 and 22 and the magnet 40 of the first embodiment. The light source 140 attached to a movable body 2 is configured to move on a movement path M extending along an X direction (first direction). The position detection device 101 detects whether the movable body 2 movable in the X direction (thus a detection target such as a tool of a machining center) is in a predetermined position. As the light source 140, a variety of light sources such as fluorescent lamps, incandescent lamps, and LEDs can be used.

The light sensors 121 and 122 detect ambient light, and have identical sensor characteristics (electrical characteristic, optical characteristic, and temperature characteristic). These light sensors 121 and 122 are disposed on a fixing portion 10 extending in the X direction, and are spaced apart from the movement path M, on which the light source 140 moves, by an equal distance in a Z direction. The light sensors 121 and 122 respectively include sensor sensing surfaces 121A and 122A perpendicular to the Z direction. Further, the light sensors 121 and 122 are disposed at an equal distance from the reference line S extending in the Z direction. In other words, the reference line S is positioned on the midpoint of the line segment connecting the two light sensors 121 and 122. Examples of the light sensors 121 and 122 include a CdS cell, an infrared sensor, an ultraviolet sensor, and a photodiode.

The outputs from the light sensors 121 and 122 are input to a detecting portion 30. The detecting portion 30 includes a comparison circuit that compares the outputs from these light sensors 121 and 122. Similarly to the first embodiment, since the light sensors 121 and 122 have identical sensor characteristics, when the light source 140 is positioned on the midpoint of the line segment connecting the light sensor 121 and the light sensor 122, i.e., when the moving distance is 0 mm (when the light source 140 is positioned on the reference line S), the sensor outputs of the light sensors 121 and 122 coincide. Therefore, when the sensor outputs of the light sensors 121 and 122 coincide, it can be determined that the light source 140 is positioned on the reference line S. The detecting portion 30 uses this principle, compares the output of the light sensor 121 to the output of the light sensor 122, and determines that the light source 140 is positioned on the reference line S when both coincide.

With this structure, it is possible to detect that the light source 140 is positioned on the reference line S without using a mechanical contact. That is, according to the position detection device 101 of the present embodiment, it is possible to detect the position of the movable body 2 without using a mechanical contact. Since no mechanical contact is used, shortening of the life span due to deterioration of the contact, poor continuity between contacts, and reduced detection accuracy due to wear or denting of the contact do not occur.

Here, the light sensors 121 and 122 are disposed sc that the rates of change of the outputs of the light sensors 121 and 122 are maximized when the light source 140 is positioned on the reference line S. Consequently, the outputs of the light sensors 121 and 122 are more likely to change when the light source 140 is in the vicinity of the reference line S, and thus the point where the outputs of the light sensors 121 and 122 coincide is more accurately identified. Therefore, the detection accuracy of the position of the light source 140 is increased.

Further, although the output characteristics of the light sensors 121 and 122 change with temperature, since the sensor characteristics of the light sensors 121 and 122 are identical, even if the output characteristics of the light sensors 121 and 122 change with temperature, the change in the output characteristic of the light sensor 121 and the change in the output characteristic of the light sensor 122 cancel each other out. Therefore, similarly to the first embodiment, by determining whether the output of the light sensor 121 and that of the light sensor 122 coincide, even when the temperature changes, it is possible to stably detect that the light source 140 is positioned on the reference line S.

Similarly, even when the electrical or optical characteristics of the light sensors 121 and 122 change, since the change in the output characteristic of the light sensor 121 and the change in the output characteristic of the light sensor 122 cancel each other out, it is possible to stably detect the position of the light source 140. Further, since the changes in the output characteristics of the light sensors 121 and 122 with respect to the displacement of the light source 140 in the Z direction or Y direction cancel each other out, it is possible to detect the position of the light source 140, suppressing the influence of the displacement of the light source 140 in the Z direction or Y direction.

Note that the outputs of the light sensors 121 and 122 may be converted from analog to digital, and noise may be reduced by a digital filter. Alternatively, the analog outputs of the light sensors 121 and 122 may be applied to a low-pass filter to eliminate noise.

While preferred embodiments of the present invention have been described so far, the present invention is not limited to the above-described embodiments and may be implemented in various different forms within the scope of the appended claims.

As described above, according to one aspect of the present invention, as defined in claim 1, there is provided a position detection device capable of performing position detection stably with a long life span and high detection accuracy. The position detection device incudes a magnet configured to move with a movable body on a movement path extending along a first direction. The magnet includes different magnetic poles in a second direction perpendicular to the first direction. Further, the position detection device includes a pair of magnetic sensors that are spaced apart from the movement path by an equal distance in the second direction and disposed at an equal distance from a reference line extending in the second direction. The pair of magnetic sensors have identical sensor characteristics. The position detection device includes a detecting portion configured to detect that the magnet is positioned on the reference line when the outputs of the pair of magnetic sensors coincide. Preferably, the pair of magnetic sensors each include a sensor sensing surface vertcial to the second direction.

According to another aspect of the present invention, as defined in claim 3, there is provided a position detection device capable of performing position detection stably with a long life span and high detection accuracy. The position detection device incudes a light source configured to move with a movable body on a movement path extending along a first direction. Further, the position detection device includes a pair of light sensors that are spaced apart from the movement path by an equal distance in a second direction perpendicular to the first direction and disposed at an equal distance from a reference line extending in the second direction. The pair of light sensors have identical sensor characteristics. The position detection device includes a detecting portion configured to detect that the light source is positioned on the reference line when the outputs of the pair of light sensors coincide. Preferably, the pair of light sensors each include a sensor sensing surface vertcial to the second direction.

Thus, it is possible to detect that the magnet is positioned on the reference line without using a mechanical contact. That is, according to the position detection device of the present invention, it is possible to detect the position of the movable body without using a mechanical contact point. Thus, according to the position detection device of the present invention, since no mechanical contact is used, shortening of the life span due to deterioration of the contact, poor continuity between contacts, and reduced detection accuracy due to wear or denting of the contact do not occur. Further, since the changes in the output characteristics of magnetic sensors due to temperature change or the like cancel each other out between the pair of magnetic sensors, it is possible to stably detect the position of the magnet.

The outputs of the pair of magnetic sensors each exhibit a maximum rate of change when the magnet is positioned on the reference line. Thus, since the outputs of the magnetic sensors are likely to change when the magnet is in the vicinity of the reference line, the point where the outputs of the magnetic sensors coincide is more accurately identified, and the detection accuracy of the position of the magnet is increased.

The outputs of the pair of light sensors each exhibit a maximum rate of change when the light source is positioned on the reference line. Thus, since the outputs of the light sensors are likely to change when the light source is in the vicinity of the reference line, the point where the outputs of the light sensors coincide is more accurately identified, and the detection accuracy of the position of the light source is increased.

According to the present invention, there is provided a position detection device capable of performing position detection stably with a long life span and high detection accuracy.

### INDUSTRIAL APPLICABILITY

The present invention is suitably applicable in a position detection device that detects the position of a movable body.

### EXPLANATION OF REFERENCE NUMERALS

- 1: position detection device
- 2: movable body
- 10: fixing portion
- 21, 22: magnetic sensor
- 30: detecting portion
- 40: magnet
- 41, 42: magnetic pole
- 101: position detection device
- 121, 122: light sensor
- 140: light source
- M: movement path
- S: reference line

## Claims

1. A position detection device for detecting a position corresponding to a reference line, comprising:
a magnet (40) configured to move with a movable body (2) on a movement path (M) extending along a first direction, the magnet (40) comprising a pair of different magnetic poles (41, 42) in a second direction perpendicular to the first direction;
a pair of magnetic sensors (21, 22) that are spaced apart from the movement path (M) by an equal distance in the second direction and disposed at an equal distance from the reference line (S) extending in the second direction, the pair of magnetic sensors (21, 22) having identical sensor characteristics; and
a detecting portion (30) configured to detect that the magnet (40) comprising the pair of magnetic poles (41, 42) is positioned on the reference line (S) when outputs of the pair of magnetic sensors (21, 22) coincide,
the outputs of the pair of magnetic sensors (21, 22) each exhibiting a maximum rate of change when the magnet (40) comprising the pair of magnetic poles (41, 42) is positioned on the reference line (S).

2. The position detection device according to claim 1, wherein the pair of magnetic sensors (21, 22) each comprise a sensor sensing surface perpendicular to the second direction.

3. A position detection device for detecting a position corresponding to a reference line, comprising:
a light source (140) configured to move with a movable body (2) on a movement path (M) extending along a first direction;
a pair of light sensors (121, 122) that are spaced apart from the movement path (M) by an equal distance in a second direction perpendicular to the first direction and disposed at an equal distance from the reference line (S) extending in the second direction, the pair of light sensors (121, 122) having identical sensor characteristics; and
a detecting portion (30) configured to detect that the light source (140) is positioned on the reference line (S) when outputs of the pair of light sensors (121, 122) coincide,
the outputs of the pair of light sensors (121, 122) each exhibiting a maximum rate of change when the light source (140) is positioned on the reference line (S).

4. The position detection device according to claim 3, wherein the pair of light sensors (121, 122) each comprise a sensor sensing surface perpendicular to the second direction.

## Patentansprüche

1. Positionsdetektionsvorrichtung, um eine Position, die einer Bezugslinie entspricht, zu detektieren, die Folgendes umfasst:
einen Magneten (40), der konfiguriert ist, sich mit einem beweglichen Körper (2) auf einem Bewegungspfad (M), der in einer ersten Richtung verläuft, zu bewegen, wobei der Magnet (40) ein Paar verschiedener Magnetpole (41, 42) in einer zweiten Richtung senkrecht zur ersten Richtung umfasst;
ein Paar Magnetsensoren (21, 22), dessen Elemente vom Bewegungspfad (M) um eine gleiche Entfernung in der zweiten Richtung beabstandet und bei einer gleichen Entfernung von der Bezugslinie (S), die in der zweiten Richtung verläuft, angeordnet sind, wobei die Elemente des Paars Magnetsensoren (21, 22) identische Sensorcharakteristiken besitzen; und
einen Detektionsabschnitt (30), der konfiguriert ist, zu detektieren, dass der Magnet (40), der das Paar Magnetpole (41, 42) umfasst, an der Bezugslinie (S) positioniert ist, wenn Ausgaben des Paars Magnetsensoren (21, 22) übereinstimmen, wobei
die Ausgaben des Paars Magnetsensoren (21, 22) jeweils eine maximale Änderungsrate aufweisen, wenn der Magnet (40), der das Paar Magnetpole (41, 42) umfasst, an der Bezugslinie (S) positioniert ist.

2. Positionsdetektionsvorrichtung nach Anspruch 1, wobei die Elemente des Paars Magnetsensoren (21, 22) jeweils eine Sensorerfassungsoberfläche senkrecht zur zweiten Richtung umfassen.

3. Positionsdetektionsvorrichtung, um eine Position, die einer Bezugslinie entspricht, zu detektieren, die Folgendes umfasst:
eine Lichtquelle (140), die konfiguriert ist, sich mit einem beweglichen Körper (2) auf einem Bewegungspfad (M), der in einer ersten Richtung verläuft, zu bewegen;
ein Paar Lichtsensoren (121, 122), dessen Elemente vom Bewegungspfad (M) um eine gleiche Entfernung in einer zweiten Richtung senkrecht zur ersten Richtung beabstandet und bei einer gleichen Entfernung von der Bezugslinie (S), die in der zweiten Richtung verläuft, angeordnet sind, wobei die Elemente des Paars Lichtsensoren (121, 122) identische Sensorcharakteristiken besitzen; und
einen Detektionsabschnitt (30), der konfiguriert ist, zu detektieren, dass die Lichtquelle (140) an der Bezugslinie (S) positioniert ist, wenn Ausgaben des Paars Lichtsensoren (121, 122) übereinstimmen, wobei
die Ausgaben des Paars Lichtsensoren (121, 122) jeweils eine maximale Änderungsrate aufweisen, wenn die Lichtquelle (140) an der Bezugslinie (S) positioniert ist.

4. Positionsdetektionsvorrichtung nach Anspruch 3, wobei die Elemente des Paars Lichtsensoren (121, 122) jeweils eine Sensorerfassungsoberfläche senkrecht zur zweiten Richtung umfassen.

## Revendications

1. Dispositif de détection de position pour la détection d'une position correspondant à une ligne de référence, comprenant :
un aimant (40) configuré pour se déplacer avec un corps mobile (2) sur une trajectoire de déplacement (M) s'étendant le long d'une première direction, l'aimant (40) comprenant une paire de pôles magnétiques (41, 42) différents dans une deuxième direction perpendiculaire à la première direction ;
une paire de capteurs magnétiques (21, 22) qui sont espacés de la trajectoire de déplacement (M) d'une égale distance dans la deuxième direction et disposés à une égale distance de la ligne de référence (S) s'étendant dans la deuxième direction, la paire de capteurs magnétiques (21, 22) ayant des caractéristiques de capteur identiques ; et
une partie de détection (30) configurée pour détecter que l'aimant (40) comprenant la paire de pôles magnétiques (41, 42) est positionné sur la ligne de référence (S) lorsque les sorties de la paire de capteurs magnétiques (21, 22) coïncident,
les sorties de la paire de capteurs magnétiques (21, 22) présentant chacune un taux de variation maximal lorsque l'aimant (40) comprenant la paire de pôles magnétiques (41, 42) est positionné sur la ligne de référence (S).

2. Dispositif de détection de position selon la revendication 1, dans lequel la paire de capteurs magnétiques (21, 22) comprennent chacun une surface sensible de capteur perpendiculaire à la deuxième direction.

3. Dispositif de détection de position pour la détection d'une position correspondant à une ligne de référence, comprenant :
une source de lumière (140) configurée pour se déplacer avec un corps mobile (2) sur une trajectoire de déplacement (M) s'étendant le long d'une première direction ;
une paire de capteurs de lumière (121, 122) qui sont espacés de la trajectoire de déplacement (M) d'une égale distance dans une deuxième direction perpendiculaire à la première direction et disposés à une égale distance de la ligne de référence (S) s'étendant dans la deuxième direction, la paire de capteurs de lumière (121, 122) ayant des caractéristiques de capteur identiques ; et
une partie de détection (30) configurée pour détecter que la source de lumière (140) est positionnée sur la ligne de référence (S) lorsque les sorties de la paire de capteurs de lumière (121, 122) coïncident,
les sorties de la paire de capteurs de lumière (121, 122) présentant chacune un taux de variation maximal lorsque la source de lumière (140) est positionnée sur la ligne de référence (S).

4. Dispositif de détection de position selon la revendication 3, dans lequel la paire de capteurs de lumière (121, 122) comprennent chacun une surface sensible de capteur perpendiculaire à la deuxième direction.
